(19) Europäisches Patentamt
European Patent Office
Office européen des brevets

(11) EP 4 379 593 A1

(12) EUROPEAN PATENT APPLICATION

(43) Date of publication:
05.06.2024 Bulletin 2024/23

(21) Application number: 23199380.9

(22) Date of filing: 25.09.2023

(51) International Patent Classification (IPC):
G06F 30/20 (2020.01)    G06F 111/02 (2020.01)

(52) Cooperative Patent Classification (CPC):
G06F 30/20; G06F 2111/02

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 30.11.2022 JP 2022192494

(71) Applicant: FUJITSU LIMITED
Kawasaki-shi, Kanagawa 211-8588 (JP)

(72) Inventors:
• Takahashi, Eiichi
  Kawasaki-shi, Kanagawa, 211-8588 (JP)
• Yamaoka, Hisatoshi
  Kawasaki-shi, Kanagawa, 211-8588 (JP)
• Okabayashi, Miwa
  Kawasaki-shi, Kanagawa, 211-8588 (JP)

(74) Representative: Hoffmann Eitle
Patent- und Rechtsanwälte PartmbB
Arabellastraße 30
81925 München (DE)

(54) INFORMATION PROCESSING METHOD AND INFORMATION PROCESSING PROGRAM

(57) An information processing method includes acquiring by a computer, in a simulation that is executed by a target simulator in cooperation with another simulator, a probability of occurrence of data communication from the other simulator to the target simulator, for each of sections obtained by dividing a simulation time of the target simulator, and determining timings of creation of a snapshot of the target simulator in the simulation, based on the acquired probability of occurrence of the data communication in each of the sections.

FIG. 1

EP 4 379 593 A1

**Description**

FIELD

The embodiments discussed herein are related to an information processing method and an information processing program.

BACKGROUND

In a known Co-Simulation in which a plurality of simulators are combined, there are cases where time alignment between simulators is performed. Time alignment between simulators is performed, for example, by returning the state of a simulator too much ahead of time to a state saved in a snapshot, and re-executing the simulation. Snapshots are periodically created, for example, during the simulation.

As a known technique, there is a technique by which an arbitrary number of simulation states is stored at an arbitrary timing, a simulation model and a pattern are resynthesized from a state inside a simulator, and the simulation model and the pattern are output to the outside of the simulator. There also is a technique by which, in a case where a stop instruction arrives from a main processor, the current time indicating the stop time in a sub processor is acquired, the process is returned to the state at a past point of time by the amount equivalent to a delay time calculated from the original time and the current time, and the stop timings in the main processor and the sub processor are matched.

Japanese Laid-open Patent Publication No. 6-295295 and Japanese Laid-open Patent Publication No. 2005-234617 are disclosed as related art.

TECHNICAL PROBLEM

With the known techniques, however, there is a problem in that it is difficult to create, at an appropriate frequency, snapshots in which states of a simulator are saved.

In one aspect, the embodiments aim to optimize the snapshot creation frequency.

SUMMARY

According to an aspect of the embodiments, an information processing method includes acquiring by a computer, in a simulation that is executed by a target simulator in cooperation with another simulator, a probability of occurrence of data communication from the other simulator to the target simulator, for each of sections obtained by dividing a simulation time of the target simulator, and determining timings of creation of a snapshot of the target simulator in the simulation, based on the acquired probability of occurrence of the data communication in each of the sections.

ADVANTAGEOUS EFFECTS OF INVENTION

According to one aspect of embodiments, it is possible to optimize the snapshot creation frequency.

BRIEF DESCRIPTION OF DRAWINGS

FIG. 1 is a diagram illustrating an example of an information processing method according to a first embodiment;
FIG. 2 is a diagram illustrating an example system configuration of an information processing system according to a second embodiment;
FIG. 3 is a block diagram illustrating an example hardware configuration of a simulator unit Uk according to the second embodiment;
FIG. 4 is a diagram illustrating an example of the contents stored in an event log table;
FIG. 5 is a diagram illustrating an example of the contents stored in an execution time log table;
FIG. 6 is a block diagram illustrating an example functional configuration of the simulator unit Uk according to the second embodiment;
FIG. 7 is a diagram illustrating an example of calculation of event occurrence probability and event occurrence accumulation;
FIG. 8 is a diagram illustrating an example of calculation of average step execution times;
FIG. 9 is a diagram illustrating an example of calculation of snapshot times;
FIG. 10 is a diagram illustrating Cost(n);

FIG. 11 is a diagram illustrating an example operation of the simulator unit Uk;

FIG. 12 is a flowchart illustrating an example of simulator control processing procedures by a client device;

FIG. 13 is a flowchart illustrating an example of simulation processing procedures by the simulator unit Uk;

FIG. 14 is a flowchart illustrating an example of specific processing procedures in an execution log acquisition process;

FIG. 15 is a flowchart illustrating an example of specific processing procedures in a snapshot schedule creation process; and

FIG. 16 is a flowchart illustrating an example of specific processing procedures in a snapshot creation process.

DESCRIPTION OF EMBODIMENTS

In the description below, embodiments of an information processing method and an information processing program are described in detail with reference to the drawings.

(First Embodiment)

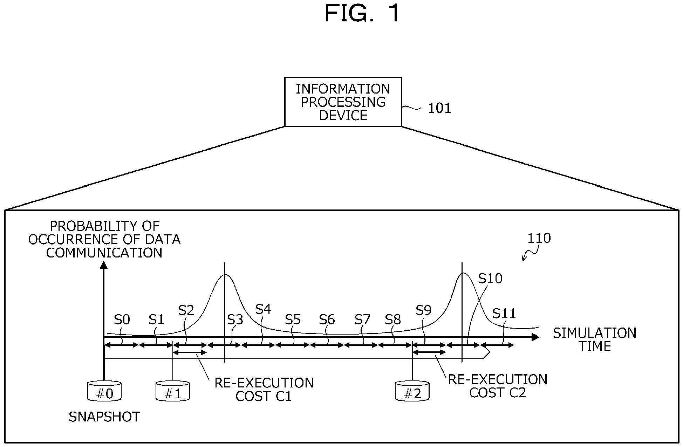

FIG. 1 is a diagram illustrating an example of an information processing method according to a first embodiment. In FIG. 1, an information processing device 101 is a computer that determines the timing of creating a snapshot of a target simulator in a simulation in which a plurality of simulators cooperate. The target simulator is a simulator that is the target for which the timing of snapshot creation is determined among the plurality of simulators.

A snapshot is information that stores the state of a simulator in a simulation. The snapshot includes, for example, the values of various parameters for identifying the state of the target simulator at the time of creating the snapshot. The timing of snapshot creation indicates when a snapshot of the target simulator is to be created in the simulation.

Here, there are cases where a large-scale simulation (for example, Co-Simulation) is performed by combining a plurality of simulators. For example, there are cases where a congestion situation is simulated by combining a traffic simulator and a human behavior simulator. The respective simulators exchange data with each other, and cooperates by transmitting and receiving events, for example.

To obtain a correct simulation result, each simulator is expected to process events in chronological order without any omission. However, due to a difference in contents to be simulated by the respective simulators, a difference in performance of computers to operate the respective simulators, or the like, the processing speeds of the respective simulators vary, and time may differ between the simulators. The time is the simulation time in the simulator.

For example, it is assumed that the human behavior simulator sends an event "get on the bus at 7:00 " to the traffic simulator. If the traffic simulator is ahead of 7:00 at this point of time, the event "get on the bus at 7:00 " from the human behavior simulator is not reflected in the simulation, resulting in a wrong simulation result.

In such a case, time alignment (synchronization) between the simulators is performed. For example, each simulator creates a snapshot, and saves a state in the middle of the simulation. In a case where the traffic simulator is ahead of time compared with the human behavior simulator, the traffic simulator restores its own state to the state before 7:00, using the snapshot, and re-executes the simulation.

By doing so, the traffic simulator may capture the event "get on the bus at 7:00" from the human behavior simulator, and perform the simulation. When a snapshot is created, on the other hand, a process such as dumping all the data of the simulator and dropping the data into a file is performed. Therefore, the processing time and the processing load increase, and the amount of use of the storage device increases.

There is a known technique for periodically taking snapshots at predetermined time intervals. By the known technique, each simulator creates snapshots at predetermined time intervals, and, in a case where an event with an old time stamp arrives, restores a state using the closest snapshot before that time. Each simulator then re-executes the simulation from the restored state to the event time.

By the known technique, however, it is difficult to create snapshots at an appropriate frequency. For example, if the snapshot creation intervals are too short, there is a problem in that many unnecessary snapshots not to be used for restoration are created, though the costs required for re-execution of the simulation are lowered. Further, if the snapshot creation interval is too long, there is a problem in that the costs for re-execution of the simulation increases, though the number of unnecessary snapshots not to be used for restoration is reduced.

In view of the above, the first embodiment concerns an information processing method for optimizing the snapshot creation frequency. Here, an example of processes to be performed by the information processing device 101 is described.

(1) The information processing device 101 acquires a probability of occurrence of data communication from another simulator to the target simulator, for each of the sections obtained by dividing the simulation time of the target simulator in the simulation to be executed by the target simulator in cooperation with the other simulator.

Here, the other simulator is, for example, a simulator different from the target simulator among a plurality of simulators that execute Co-Simulation. For example, in a case where a congestion situation is simulated by combining a traffic simulator and a human behavior simulator, when the target simulator is the "traffic simulator", the other simulator is the "human behavior simulator".

The simulation time is the time elapsed in the target simulator during the simulation. The sections dividing the simulation time may be set as appropriate. For example, a section is one step of the target simulator that executes a step of the simulation. Data communication from the other simulator to the target simulator is communication for transferring data between the simulators.

Data is, for example, an event that is transmitted and received for cooperation between the simulators. The probability of occurrence of data communication is the degree of the possibility that data communication from the other simulator to the target simulator will occur in each section.

The information processing device 101 may acquire the probability of occurrence of data communication that is manually input through a user interface (UI), for example. Alternatively, the information processing device 101 may acquire the probability of occurrence of data communication by performing calculation based on the records of occurrence of data communication in the respective sections in the past simulations.

Further, a simulation is tried a plurality of times in many cases. For example, there is a case a simulation is executed 1000 times for a certain scenario while the values of random elements are changed. In this case, the information processing device 101 may calculate the probability of occurrence of data communication in each section in the remaining 900 simulations, for example, based on the records of occurrence of data communication in the respective sections in the first 100 simulations.

In the example in FIG. 1, it is assumed that the sections obtained by dividing the simulation time of the target simulator are set as "sections S0 to S11", and the probability of data communication in each of the sections S0 to S11 is calculated. Each of the sections S0 to S11 corresponds to one step of the target simulator, for example. A graph 110 illustrates the time change in the probability of occurrence of data communication in each of the sections S0 to S11.

(2) The information processing device 101 determines the timing of creation of a snapshot of the target simulator in a simulation, based on the acquired probability of occurrence of data communication for the respective sections. Here, the time alignment between the simulators is performed, for example, to capture an event leaked due to a difference in simulation time.

Even if a snapshot of the target simulator is created in a section in which any event from the other simulator does not occur, the snapshot is likely to be wasted. On the other hand, if there is a snapshot immediately before an event occurs, the time intervals until the event time is shortened, and thus, the simulation re-execution costs may be lowered.

In other words, it may be said that, if a snapshot may be created before the time at which an event is likely to occur, the simulation re-execution costs may be lowered while the number of unnecessary snapshots is reduced.

Therefore, the information processing device 101 determines a timing of snapshot creation so as to create a snapshot at a point when the probability of occurrence of data communication starts to rise, for example.

Specifically, the information processing device 101 identifies, for example, sections in which the calculated probability of occurrence of data communication is equal to or higher than a threshold, among the sections obtained by dividing the simulation time of the target simulator. The information processing device 101 may then determine that the sections immediately before the identified sections are the timings of snapshot creation.

Also, the information processing device 101 identifies a predetermined number of sections that have the higher calculated probabilities of occurrence of data communication, among the sections obtained by dividing the simulation time of the target simulator. The information processing device 101 may then determine that the sections immediately before the identified sections are the timings of snapshot creation.

Further, the information processing device 101 calculates the slope of the probability of occurrence of data communication in each section, based on the time-series change in the probability of occurrence of data communication. The information processing device 101 may then identify the sections in which the calculated slopes are equal to or steeper than a threshold, and determine that the sections immediately before the identified sections are the timings of snapshot creation.

Also, the information processing device 101 calculates the slope of the probability of occurrence of data communication in each section, based on the time-series change in the probability of occurrence of data communication. The information processing device 101 may then identify a predetermined number of sections that have the steeper calculated slopes, and determine that the sections immediately before the identified sections are the timings of snapshot creation.

Note that, although a case where the sections immediately before the identified sections are determined to be the timings of snapshot creation has been described as an example herein, the embodiment is not limited to this. For example, the information processing device 101 may determine that a section preceding each identified section by a predetermined number of sections is a timing of snapshot creation. The predetermined number is set to a value of about 1 to 3, for example.

In the example in FIG. 1, it is assumed that the section S0, the section S2, and the section S9 are determined to be the timings of creation of a snapshot of the target simulator. The section S0 corresponds to the start time of the simulation. The section S2 corresponds to the section immediately before the section S3 in which the data communication occurrence probability is equal to or higher than the threshold. The section S9 corresponds to the section immediately before the section S10 in which the data communication occurrence probability is equal to or higher than the threshold.

As described above, with the information processing device 101 according to the first embodiment, in an environment in which simulations are executed, it is possible to create a snapshot of the target simulator before the probability of occurrence of data communication from the other simulator to the target simulator rises, and optimize the frequency of snapshot creation.

In the example in FIG. 1, a snapshot #0 is created in the section S0. Also, a snapshot #1 is created in the section S2. Further, a snapshot #2 is created in the section S9. As a result, the information processing device 101 does not create any snapshot in sections where the possibility that data communication (event) will occur is low as in the section S6, for example, and may reduce the number of unnecessary snapshots.

Furthermore, the information processing device 101 is capable of creating a snapshot before the probability of occurrence of data communication rises, and thus, may lower the simulation re-execution costs. For example, the snapshot #1 is created before the section S3 in which the probability of occurrence of data communication rises. Accordingly, when time alignment is performed so as to capture an event in the section S3, the recovery may be performed with the use of the snapshot #1, and the re-execution cost C1 may be lowered. Furthermore, there is a high possibility that an event occurs in the section S3, the snapshot #1 is unlikely to be wasted.

Likewise, the snapshot #2 is created before the section S10 in which the probability of occurrence of data communication rises. Accordingly, when time alignment is performed so as to capture an event in the section S10, the recovery may be performed with the use of the snapshot #2, and the re-execution cost C2 may be lowered. Furthermore, there is a high possibility that an event occurs in the section S10, the snapshot #2 is unlikely to be wasted.

Note that the environment in which simulations are executed may be the information processing device 101, for example, or may be another computer different from the information processing device 101. In a case where simulations are executed by another computer, the other computer creates snapshots of the target simulator at creation timings determined by the information processing device 101 in the simulations.

(Example System Configuration of an Information Processing System 200)

Next, an example system configuration of an information processing system including the information processing device 101 according to a second embodiment is described. Here, a case where the information processing device 101 according to the second embodiment is applied to a simulator unit in an information processing system 200 is described as an example. The information processing system 200 is applied to, for example, a computer system that performs a large-scale simulation by combining a plurality of simulators.

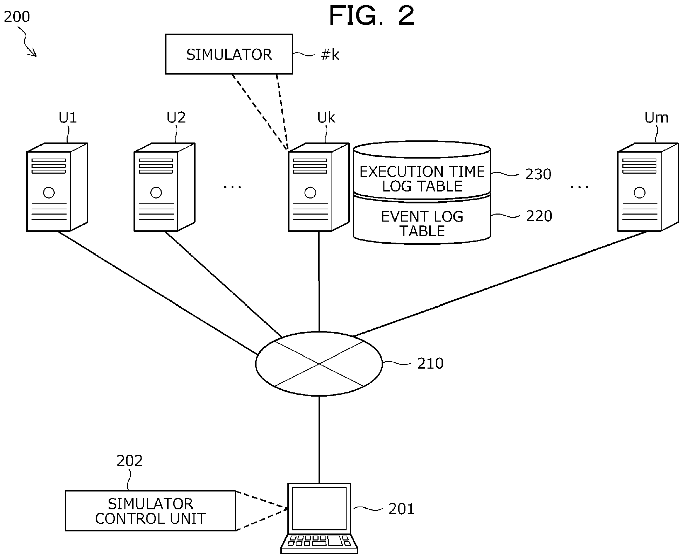

FIG. 2 is a diagram illustrating an example system configuration of the information processing system 200 according to the second embodiment. In FIG. 2, the information processing system 200 includes simulator units U1 to Um (m: a natural number of 2 or greater) and a client device 201. In the information processing system 200, the simulator units U1 to Um and the client device 201 are coupled via a wired or wireless network 210. The network 210 is, for example, the Internet, a local area network (LAN), a wide area network (WAN), or the like.

In the description below, there are cases where any one simulator unit among the simulator units U1 to Um is referred to as a "simulator unit Uk" (k = 1, 2, ..., m). Also, there are cases where another simulator unit different from the simulator unit Uk among the simulator units U1 to Um is referred to as "another simulator unit Uj" (j ≠ k, j = 1, 2, ..., m). Further, there are cases where the simulators included in the respective simulator units U1 to Um are referred to as the "simulators #1 to #m".

Here, the simulator unit Uk is a computer that executes simulations with a simulator #k. The "target simulator " described in the first embodiment corresponds to, for example, the simulator #k.

Specifically, for example, the simulator unit Uk executes a simulation in cooperation with another simulator unit Uj (another simulator #j) while transmitting and receiving events. The event from each simulator unit Uk is relayed to the destination simulator unit by the network 210.

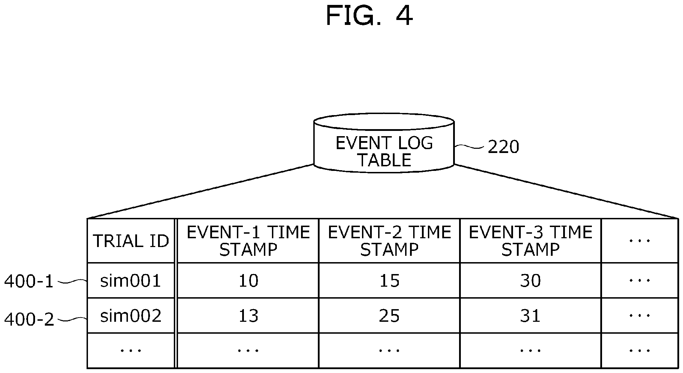

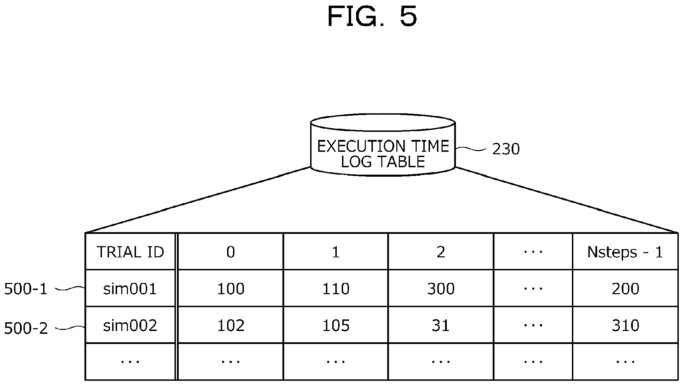

Further, the simulator unit Uk includes an event log table 220 and an execution time log table 230. The contents stored in the event log table 220 and the execution time log table 230 will be described later with reference to FIGs. 4 and 5. The simulator unit Uk is a server, for example.

The client device 201 is a computer that is used by a user of the information processing system 200. The user is, for example, a person who performs a large-scale simulation by combining a plurality of simulators. The client device 201 is, for example, a personal computer (PC), a tablet PC, or the like.

The client device 201 includes a simulator control unit 202. The simulator control unit 202 controls, for example, the settings, execution, and stops of each simulator unit Uk, and switches on and off a snapshot schedule. However, the simulator control unit 202 may be formed with another computer different from the client device 201.

(Example Hardware Configuration of the Simulator Unit Uk)

Next, an example hardware configuration of the simulator unit Uk is described.

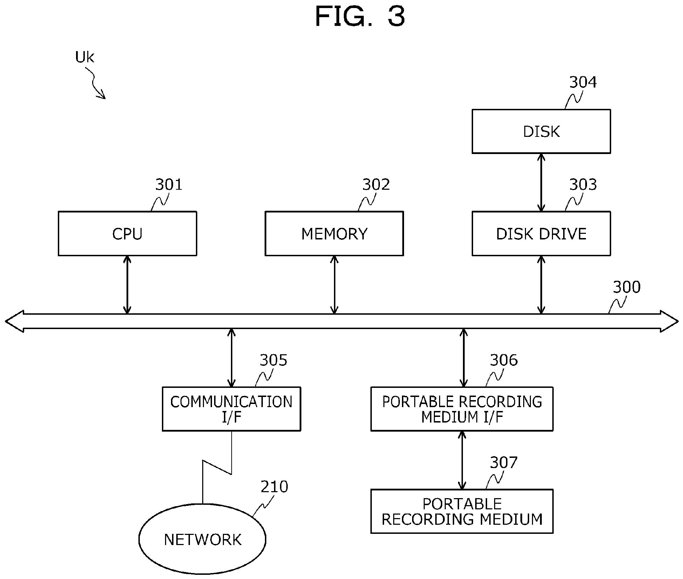

FIG. 3 is a block diagram illustrating an example hardware configuration of the simulator unit Uk according to the second embodiment. In FIG. 3, the simulator unit Uk includes a central processing unit (CPU) 301, a memory 302, a disk drive 303, a disk 304, a communication interface (I/F) 305, a portable recording medium I/F 306, and a portable recording medium 307. Further, the respective components are coupled to each other by a bus 300.

Here, the CPU 301 controls the entire simulator unit Uk. The CPU 301 may include a plurality of cores. The memory 302 includes, for example, a read only memory (ROM), a random access memory (RAM), a flash ROM, and the like. Specifically, for example, the flash ROM stores an operating system (OS) program, the ROM stores application programs, and the RAM is used as a work area for the CPU 301. The programs stored in the memory 302 are loaded into the CPU 301 to cause the CPU 301 to execute coded processes.

The disk drive 303 controls reading/writing of data from/into the disk 304, under the control of the CPU 301. The disk 304 stores data that has been written under the control of the disk drive 303. For example, the disk 304 is a magnetic disk, an optical disk, or the like.

The communication I/F 305 is coupled to the network 210 via a communication line, and is coupled to an external computer (for example, another simulator unit Uj or the client device 201) via the network 210. The communication I/F 305 then manages an interface between the network 210 and the inside of the device, and controls inputs and outputs of data from the external computer. For example, a modem, a LAN adapter, or the like may be employed as the communication I/F 305.

The portable recording medium I/F 306 controls reading/writing of data from/into the portable recording medium 307, under the control of the CPU 301. The portable recording medium 307 stores data that has been written under the control of the portable recording medium I/F 306. The portable recording medium 307 is, for example, a compact disc (CD)-ROM, a digital versatile disk (DVD), a universal serial bus (USB) memory, or the like.

Note that the simulator unit Uk may include, for example, an input device, a display, and the like, in addition to the components described above. Alternatively, the simulator unit Uk may not include, for example, the portable recording medium I/F 306 and the portable recording medium 307, among the components described above. Further, the client device 201 illustrated in FIG. 2 may be formed with a hardware configuration similar to that of the simulator unit Uk. However, the client device 201 includes, for example, an input device, a display, and the like, in addition to the components described above.

(Contents Stored in the Event Log Table 220)

Next, referring to FIG. 4, the contents stored in the event log table 220 included in the simulator unit Uk are described. The event log table 220 is implemented by, for example, a storage device such as the memory 302 or the disk 304 illustrated in FIG. 3.

FIG. 4 is a diagram illustrating an example of the contents stored in the event log table 220. In FIG. 4, the event log table 220 stores event log information (for example, event log information 400-1 and 400-2). The event log information indicates time stamps of the respective events that have been received during execution of a simulation and are associated with simulation trial identifiers (IDs). An event corresponds to data communication from another simulator #j to the simulator #k.

A trial ID is an identifier indicating how many times the simulation to be tried N times has been tried (N: a natural number of 2 or greater). For example, a trial ID °sim001" indicates the first-time simulation. The time stamp of each event indicates the simulation time at the transmission source (the other simulator #j) of each corresponding event. For example, an event-1 time stamp "10" indicates a simulation time "10" at the transmission source of an event event-1.

For example, the event log information 400-1 indicates time stamps "10, 15, 30, ..." of the respective events event-1, event-2, event-3, ... received during the execution of the simulation with the trial ID °sim001" by the simulator #k.

(Contents Stored in the Execution Time Log Table 230)

Next, referring to FIG. 5, the contents stored in the execution time log table 230 included in the simulator unit Uk are described. The execution time log table 230 is implemented by, for example, a storage device such as the memory 302 or the disk 304 illustrated in FIG. 3.

FIG. 5 is a diagram illustrating an example of the contents stored in the execution time log table 230. In FIG. 5, the execution time log table 230 stores execution time log information (for example, execution time log information 500-1 and 500-2). The execution time log information indicates the execution times of the respective steps of the simulation, the execution times being associated with the simulation trial IDs.

Nsteps indicates the number of steps to be simulated. For example, in the case of a simulator that takes one minute for one step, up to 60 (= Nsteps) steps are executed in a one-hour simulation. In this case, for example, step "0" corresponds to the simulation time "0 to 59 seconds". Further, step "1" corresponds to "60 to 119 seconds". The execution times are the actual times taken to execute the respective steps (unit: millisecond).

For example, the execution time log information 500-1 indicates the execution times "100, 110, 300, ..., and 200" of the respective steps "0", "1", "2", ..., and "Nsteps - 1" of the simulation with the trial ID °sim001" executed by the simulator #k.

(Example Functional Configuration of the Simulator Unit Uk)

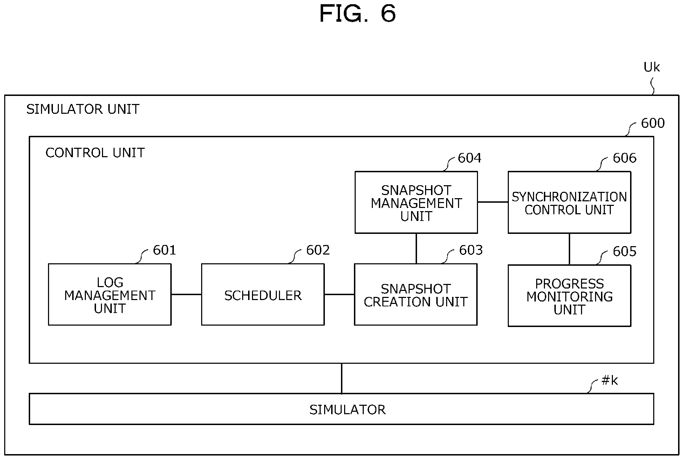

Next, referring to FIG. 6, an example functional configuration of the simulator unit Uk is described. In the description below, there are cases where one step of the simulator #k, which executes a simulation step by step, is used as an example for each section obtained by dividing the simulation time of the simulator #k.

FIG. 6 is a block diagram illustrating an example functional configuration of the simulator unit Uk according to the second embodiment. In FIG. 6, the simulator unit Uk includes a log management unit 601, a scheduler 602, a snapshot creation unit 603, a snapshot management unit 604, a progress monitoring unit 605, and a synchronization control unit 606. The log management unit 601 to the synchronization control unit 606 are functions that constitute a control unit 600, and, specifically, the functions are implemented by causing the CPU 301 to execute a program stored in a storage device such as the memory 302, the disk 304, or the portable recording medium 307 illustrated in FIG. 3, or by the communication I/F 305, for example. A processing result from each functional unit is stored, for example, in a storage device such as the memory 302 or the disk 304.

When a simulation is repeatedly executed N times, the log management unit 601 records event occurrence records in the respective times of the simulation from the initial time to the Na-th time (a first designated time) among the N times. Here, the simulation is a simulation that is executed by the simulator #k in cooperation with another simulator #j.

The events are events that are exchanged between the simulators, and correspond to data communication from the other simulator #j to the simulator #k. N may be set to any value, and is set to a value of about 1000, for example. Na is a smaller value than N, and is set to a value of about 100 (about 10% of N), for example.

Specifically, for example, the simulator #k receives an event from the other simulator #j. In this case, the log management unit 601 records a time stamp Te of the received event in the event log table 220 illustrated in FIG. 4. The time stamp Te is associated with a simulation trial ID. The time stamp Te is a simulation time at the other simulator #j that is the event transmission source. The time stamp Te is allocated to the event.

More specifically, for example, in a case where an event is received for the first time in the first-time simulation, the log management unit 601 records the time stamp Te of the received event as the event-1 time stamp associated with the trial ID °sim001". Also, in a case where an event is received for the second time in the first-time simulation, the log management unit 601 records the time stamp Te of the received event as an event-2 time stamp associated with the trial ID °sim001".

Further, when the simulation is repeatedly executed N times, the log management unit 601 records the execution time of each step of the simulator #k regarding the execution of the simulation, in each time of the simulation from the initial time to the Na-th time among the N times.

Specifically, for example, the simulator #k measures the execution time (real time) taken to execute one step. The log management unit 601 then associates the measured execution time with the simulation trial ID, and records the measured execution time in the execution time log table 230 illustrated in FIG. 5.

More specifically, for example, in a case where an execution time "100" of the 0-th step is measured in the first-time simulation, the log management unit 601 associates the execution time "100" with the trial ID °sim001", and records the execution time "100" as the execution time of step "0". Also, in a case where an execution time "110" of the first step is measured in the first-time simulation, the log management unit 601 associates the execution time "110" with the trial ID °sim001", and records the execution time "110" as the execution time of step "1".

The scheduler 602 determines snapshot creation timings for the simulator #k. The snapshot creation timings are represented by, for example, the number $n$ of snapshots and snapshot times $\{t_0, t_1, ...,$ and $t_{n-1}\}$. The number $n$ of snapshots is the number of snapshots to be created by the simulator #k in the simulation. The snapshot times $\{t_0, t_1, ...,$ and $t_{n-1}\}$ indicate the simulation times at which the $n$ respective snapshots are created.

Specifically, for example, the scheduler 602 calculates the event occurrence probability in each step of the simulator #k in the simulation. Here, the event occurrence probability indicates the rate at which an event occurs from another simulator #j to the simulator #k in each step. The "probability of occurrence of data communication" described in the first embodiment corresponds to the event occurrence probability, for example.

The scheduler 602 then determines a snapshot creation timing, based on the execution time in each step of the simulator #k and the calculated event occurrence probability in each step. The execution time in each step of the simulator #k is, for example, an execution time in each step, which is recorded by the log management unit 601.

More specifically, for example, the scheduler 602 refers to the event log table 220, and calculates the event occurrence probability and the event occurrence accumulation in each step of the simulator #k. The event occurrence accumulation is the value obtained by sequentially accumulating the event occurrence probabilities of the respective steps. The event log table 220 stores, for example, the time stamps of events in the respective times of the simulation till the Na-th time.

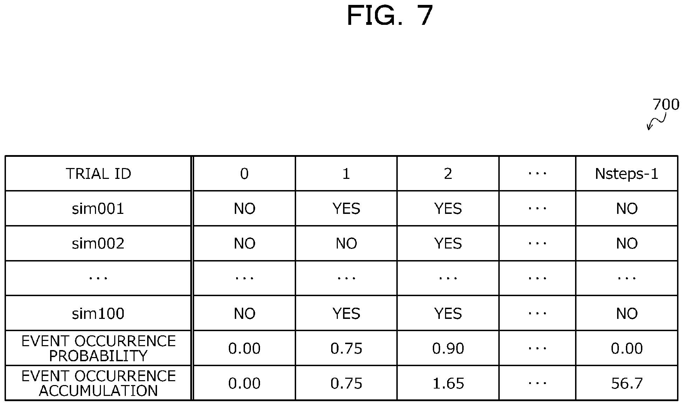

Here, referring to FIG. 7, an example of calculation of the event occurrence probability and the event occurrence accumulation is described. Here, Na is set to "Na = 100".

FIG. 7 is a diagram illustrating an example of calculation of the event occurrence probability and the event occurrence accumulation. In FIG. 7, a calculation table 700 is information that is used to calculate the event occurrence probability and the event occurrence accumulation in each step. In the calculation table 700, whether an event has occurred in each step of each time of the simulation from the first time to the 100-th time (Na = 100) is indicated by "YES" or "NO".

"YES" indicates that an event from another simulator #j to the simulator #k has occurred. "NO" indicates that any event from another simulator #j to the simulator #k has not occurred. In step i of each time of the simulation, whether an event has occurred is determined, for example, from the event log table 220.

For example, the scheduler 602 refers to the event log table 220, and determines whether an event has occurred within the simulation time [i*Tstep, (i+1)*Tstep] for step i of each time of the simulation. Tstep is the simulation time that corresponds to one step and is set for each simulator.

For example, Tstep is set to "Tstep = 60 seconds". In this case, step "0" corresponds to the simulation time "0 to 59 seconds". Further, step "1" corresponds to "60 to 119 seconds". Here, taking step "0" of the first-time simulation as an example, in a case where there is a time stamp Te within the simulation time [0, 59], the scheduler 602 determines that an event has occurred.

On the other hand, in a case where there is no time stamp Te within the simulation time [0, 59] in step "0" of the first-time simulation, the scheduler 602 determines that any event has not occurred. Note that the simulation time [0, 59] indicates a simulation time of from the 0-second range to the 59-second range.

In the example in FIG. 7, it is assumed that it is determined that any event has not occurred in step "0" of the first-time simulation. In this case, "NO" is set in the portion corresponding to step "0" of the first-time simulation (sim001) in the calculation table 700. In this manner, whether an event has occurred in each step of each time of the simulation from the first time to the 100-th time is indicated by "YES" or "NO".

Next, the scheduler 602 calculates the event occurrence probability p(t) in step t of the simulator #k, using, for example, Expression (1) (t = 0, 1, 2, ...) represented below. Note that the number of times an event has occurred is the total number of "YES" in steps t of the first-time to Na-th-time simulations. Here, Na is "Na = 100".

$$p(t) = \text{the number of times an event has occurred}/Na \;...(1)$$

Also, the scheduler 602 calculates the event occurrence accumulation epa(t) in steps t of the simulator #k, using, for example, Expression (2) represented below.

$$epa(t) = \sum_{i=0}^{t} p(i) \,...(2)$$

The calculated event occurrence probability and the event occurrence accumulation in each step are stored in, for example, the calculation table 700. For example, the event occurrence probability in step "0" is "0.00". The event occurrence accumulation in step "0" is "0.00". Meanwhile, the event occurrence probability in step "1" is "0.75". The event occurrence accumulation in step "1" is "0.75".

Note that it is assumed herein that, among the simulation steps (0 to Nsteps - 1), a step in which the frequency of occurrence of a synchronization process for time alignment between the simulators tends to be high is known. In this case, the scheduler 602 may weight the event occurrence probability of the step in which the frequency of occurrence of the synchronization process tends to be high. The weighting of the event occurrence probability is performed, for example, by multiplying the event occurrence probability by a value greater than 1 (such as 1.3). In this manner, the scheduler 602 may further optimize the frequency of snapshot creation.

Next, the scheduler 602 refers to the execution time log table 230, and calculates an average step execution time in each step of the simulator #k. The average step execution time is an average value of the execution times of the respective times of the simulation for step i. The execution time log table 230 stores, for example, the execution times of the respective steps in the respective times of the simulation till the Na-th time.

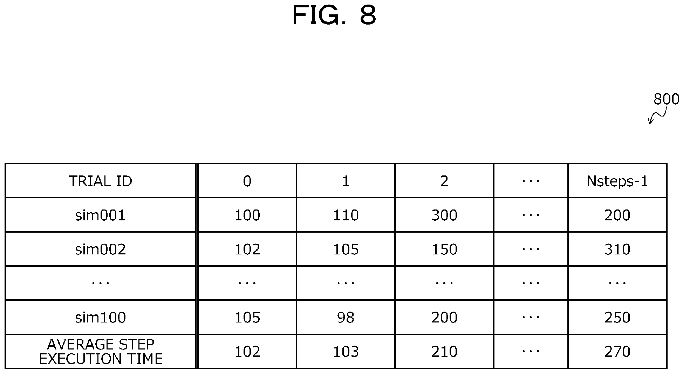

Here, referring to FIG. 8, an example of calculation of average step execution times is described. Here, Na is set to "Na = 100".

FIG. 8 is a diagram illustrating an example of calculation of average step execution times. In FIG. 8, a calculation table 800 is information that is used to calculate the average step execution time in each step. In the calculation table 800, the execution times in the respective steps of the respective times of the simulation from the first time to the 100-th time (Na = 100) is depicted.

The scheduler 602 calculates an average step execution time L(t) of step t of the simulator #k, using, for example, Expression (3) represented below. Note that I(i) is the execution time of step t in the i-th-time simulation.

$$L(t) = \frac{1}{Na} \sum_{i=1}^{Na} l(i) \dots (3)$$

The calculated average step execution time in each step is stored in, for example, the calculation table 800. For example, the average step execution time of step "0" is "102". Meanwhile, the average step execution time of step "1" is "103".

The scheduler 602 then determines a snapshot creation timing in the simulation after the Na-th time (a first designated time) among the N times, based on the calculated event occurrence probability in each step and the calculated average step execution time in each step.

For example, the scheduler 602 determines snapshot creation timings by searching for the number n of snapshots and the snapshot times $\{t_0, t_1, ..., \text{and } t_{n-1}\}$ that minimize Cost(n) while changing the number n of snapshots, using Expression (4) represented below.

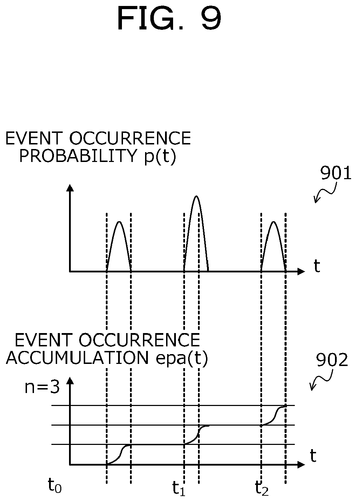

Note that $C_{snap}$ represents one snapshot acquisition time. The snapshot acquisition time is the time to be taken to create a snapshot. For example, $C_{snap}$ is set beforehand based on an actual measurement value of one snapshot acquisition time. Further, the snapshot times $\{t_0, t_1, ..., \text{and } t_{n-1}\}$ are calculated from the event occurrence accumulation, for example, in accordance with the number n of snapshots. An example of calculation of the snapshot times $\{t_0, t_1, ..., \text{and } t_{n-1}\}$ will be described later with reference to FIG. 9.

$$Cost(n) = nC_{snap} + \sum_{i=0}^{n-1} \int_{t_i}^{t_{i+1}} p(t) \left( \int_{t_i}^{t} L(s)ds \right) dt \dots (4)$$

The first term (first cost) in the right side of the above Expression (4) corresponds to the total snapshot acquisition time. Meanwhile, the second term (second cost) in the right side of the above Expression (4) corresponds to an estimated re-execution time. The value of the average step execution time L(t) is used for L(s) included in the second term (second cost) in the right side of the above Expression (4).

Specifically, for example, the simulator converts a simulation time s into "step", using Expression (5) represented below. The simulator then refers to the calculation table 800, and identifies the average step execution time corresponding to the converted "step".

$$step = \left\lfloor \frac{s}{Tstep} \right\rfloor \dots (5)$$

For example, Tstep is set to "Tstep = 60 seconds". In this case, when the simulation time s is "s = 59", the "step" is "step = 0". Accordingly, L(s) is "L(s) = 102". Further, when the simulation time s is "s = 120", the "step" is "step = 2". Accordingly, L(s) is "L(s) = 210".

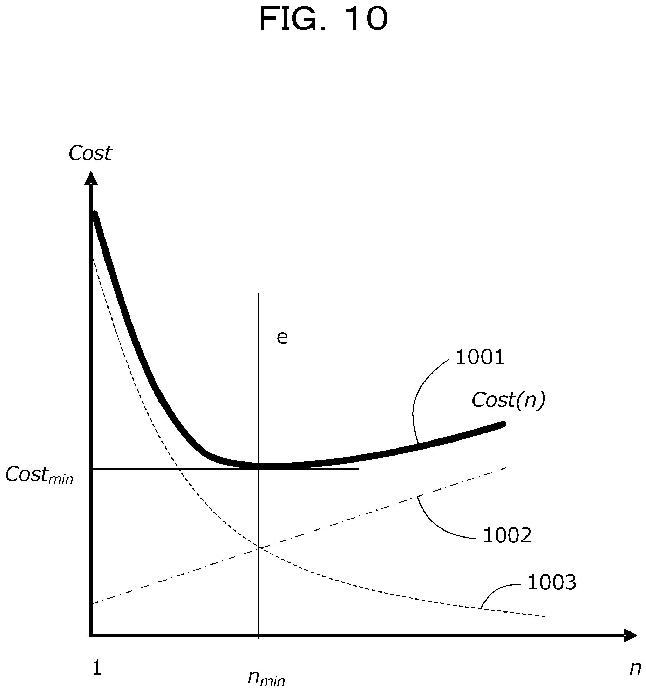

Note that Cost(n) calculated using the above Expression (4) will be described later in detail with reference to FIG. 10.

In the simulation, the snapshot creation unit 603 creates a snapshot of the simulator #k at the determined creation timing. Specifically, for example, when the simulation is executed N times, the snapshot creation unit 603 creates the respective snapshots #0, #1, ..., and #(n-1) when the simulation time reaches the respective snapshot times $\{t_0, t_1, ..., t_{n-1}\}$ in the respective times of the simulation after the Na-th time.

For example, the snapshot creation unit 603 creates the snapshot #0 when the simulation time is the snapshot time $t_0$. Further, the snapshot creation unit 603 creates the snapshot #1 when the simulation time is the snapshot time $t_1$. Note that the snapshot creation unit 603 creates snapshots of the simulator #k at predetermined time intervals, for example, in the respective times of the simulation till the Na-th time.

The snapshot management unit 604 holds the created snapshots of the simulator #k. Specifically, for example, the snapshot management unit 604 stores the created snapshots of the simulator #k associated with the snapshot times.

In the simulation, the progress monitoring unit 605 relays an event from another simulator #j to the simulator #k. In doing so, the progress monitoring unit 605 compares the time stamp Te of the event with the simulator time Ts. In a case where the time stamp Te is earlier than the simulator time Ts, the progress monitoring unit 605 then instructs the synchronization control unit 606 to perform synchronization.

Thus, the progress monitoring unit 605 may instruct time alignment (synchronization) between the simulators, in a case where the simulation time is too much ahead of the other simulator #j. Further, the progress monitoring unit 605 sends an event to the simulator #k, after the synchronization by the synchronization control unit 606 is completed.

In response to the synchronization instruction, the synchronization control unit 606 restores the state of the simulator #k, using a held snapshot. The synchronization instruction includes, for example, the time stamp Te of an event that has not been taken in due to a time difference between the simulators. The synchronization control unit 606 then causes the simulator #k after the restoration to re-execute the simulation.

Specifically, for example, the synchronization control unit 606 acquires the snapshot whose snapshot time is earlier than the time stamp Te of the event and is closest to the time stamp Te among the held snapshots. Next, the synchronization control unit 606 restores the state of the simulator #k, using the acquired snapshot. The synchronization control unit 606 then causes the simulator #k to re-execute the simulation till the time stamp Te.

Also, when the simulation is repeatedly executed N times, the log management unit 601 may determine whether the event occurrence probability in each step has converged at the Na'-th time (a second designated time) earlier than the Na-th time (the first designated time). In a case where it is determined that the event occurrence probability has converged, the log management unit 601 may then stop recording the event occurrence records in the simulation after the Na'-th time among the N times.

The convergence of the event occurrence probability may be determined, for example, in a case where the difference in event occurrence probability between consecutive times (for example, the second time and the third time) is equal to or smaller than a threshold in each step consecutive times (for example, three times). For example, for each step, the log management unit 601 may determine that the event occurrence probability has converged, in a case where the difference in event occurrence probability between the second time and the third time is equal to or smaller than the threshold, the difference in event occurrence probability between the third time and the fourth time is equal to or smaller than the threshold, and the difference in event occurrence probability between the fourth time and the fifth time is equal to or smaller than the threshold.

Also, in a case where it is determined that the event occurrence probability has converged, the log management unit 601 may stop recording the execution times of the respective steps of the simulator #k in the simulation after the Na'-th time among the N times. In this case, the scheduler 602 determines the snapshot creation timings in the simulation after the Na'-th time among the N times, for example, based on the execution times and the event occurrence probabilities in the respective steps of the simulator #k till the Na'-th time (the second designated time).

Further, depending on the contents of the simulation, there is a case where the execution time of the simulator #k hardly varies with each step. In such a case, for example, the scheduler 602 may use a preset execution time (fixed value) when determining a timing of creation of a snapshot of the simulator #k. In this case, the log management unit 601 may not record the execution times in the respective steps of the simulator #k.

Also, the scheduler 602 may determine a snapshot creation timing, based only on the event occurrence probability in each step of the simulator #k. Specific contents of a process for determining a snapshot creation timing based only on the event occurrence probability are similar to, for example, those of the information processing device 101 described with reference to FIG. 1.

(Example of Calculation of Snapshot Times)

Next, referring to FIG. 9, an example of calculation of the snapshot times $\{t_0, t_1, ..., t_{n-1}\}$ is described.

FIG. 9 is a diagram illustrating an example of calculation of the snapshot times. In FIG. 9, a graph 901 illustrates a temporal change in the event occurrence probability p(t) in the simulator #k. Also, a graph 902 illustrates a temporal change in the event occurrence accumulation epa(t) in the simulator #k.

First, the scheduler 602 refers to, for example, the calculation table 700, and identifies the upper limit $epa_{max}$

of the event occurrence accumulation epa(t). The upper limit $epa_{max}$ is the highest event occurrence accumulation epa(t). Next, the scheduler 602 identifies the number n of snapshots. Here, n is an integer of 2 or greater.

The scheduler 602 then calculates $epa_0$, $epa_1$, ..., and $epa_{n-1}$ by dividing the upper limit $epa_{max}$ into n equal parts, using Expression (6) represented below. Here, i is an integer of 0 or greater.

$$epa_i = (epa_{max}/n)*i \quad ...(6)$$

Next, the scheduler 602 calculates $t_i$ at which "$epa_i = epa(t_i)$" is satisfied. Here, $t_i$ represents the simulation time. At this point, in a case where there are a plurality of simulation times at which "$epa_i = epa(t_i)$" is satisfied, the scheduler 602 sets the latest simulation time as $t_i$.

Thus, the scheduler 602 may efficiently calculate the snapshot times {$t_0$, $t_1$, ..., and $t_{n-1}$}, which are the simulation times before the start of a rise in the event occurrence probability p(t). Also, the scheduler 602 may calculate the snapshot times {$t_0$, $t_1$, ..., and $t_{n-1}$} in accordance with the number n of snapshots, by changing the number n of snapshots.

Further, in a case where there are a plurality of simulation times at which "$epa_i = epa(t_i)$" is satisfied, the scheduler 602 may set the latest simulation time as the snapshot time $t_i$. Thus, the scheduler 602 may lower the re-execution cost by skipping the sections in which the event occurrence accumulation does not vary, and the event occurrence possibility is low.

In the example in FIG. 9, the number n of snapshots is "n = 3", and the simulation times before the start of a rise in the event occurrence probability p(t) is calculated as the snapshot times {$t_0$, $t_1$, and $t_2$}. Note that the initial snapshot time $t_0$ is the start time of the simulation.

(Regarding Cost(n))

Next, referring to FIG. 10, Cost(n) to be calculated using the above Expression (4) is described.

FIG. 10 is a diagram illustrating Cost(n). In FIG. 10, a graph 1001 illustrates Cost(n) calculated using the above Expression (4). A graph 1002 illustrates the total snapshot acquisition time that is the first term (first cost) in the right side of the above Expression (4). A graph 1003 illustrates the estimated re-execution time that is the second term (second cost) in the right side of the above Expression (4).

The total snapshot acquisition time is the total time to be taken to create snapshots equivalent to the number n of snapshots. The total snapshot acquisition time increases in proportion to the number n of snapshots, as indicated by the graph 1002.

The estimated re-execution time is the total sum of estimated re-execution times for the n respective sections divided by snapshots. A re-execution time is the time to be taken to re-execute the simulation till the time stamp Te of an event at the time of synchronization (time alignment between the simulators). As indicated by the graph 1003, the estimated re-execution time decreases and approaches infinitely 0, as the number n of snapshots increases.

Here, the graph 1001 is a combination of the graph 1002 and the graph 1003, and there is a minimum value ($Cost_{min}$). In the graph 1001, the minimum value $Cost_{min}$ is obtained when the number n of snapshots is $n_{min}$. The scheduler 602 searches for the number $n_{min}$ of snapshots and the snapshot times {$t_0$, $t_1$, ..., and $t_{nmin-1}$} at which the minimum value $Cost_{min}$ is obtained, while changing the number n of snapshots using the above Expression (4).

(Example Operation of the Simulator Unit Uk)

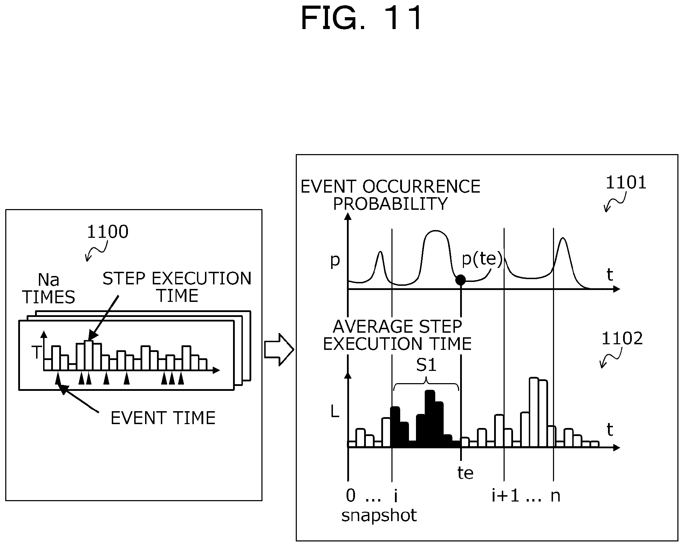

Next, referring to FIG. 11, an example operation of the simulator unit Uk is described.

FIG. 11 is a diagram illustrating an example operation of the simulator unit Uk. In FIG. 11, when the simulation is repeatedly executed N times, the simulator unit Uk records event times and step execution times as an execution log 1100 in each time of the simulation till the Na-th time.

An event time is the time stamp Te given to an event from another simulator #j. A step execution time is the execution time of each step of the simulator #k. The execution log 1100 corresponds to the event log table 220 illustrated in FIG. 4 and the execution time log table 230 illustrated in FIG. 5.

Based on the execution log 1100, the simulator unit Uk calculates the event occurrence probability p(t) and the event occurrence accumulation epa(t) in each step t of the simulator #k. Also, based on the execution log 1100, the simulator unit Uk calculates the average step execution time L(t) of each step t of the simulator #k.

In FIG. 11, a graph 1101 illustrates a temporal change in the event occurrence probability p(t) in the simulator #k. Also, a graph 1102 illustrates a temporal change in the average step execution time L(t) in the simulator #k.

The simulator unit Uk calculates the snapshot times $ST_n$ from the upper limit $epa_{max}$, in accordance with the number n of snapshots. Here, $ST_n$ are "$ST_n = \{to, t_1, ..., t_{n-1}\}$".

The simulator unit Uk searches for the number n of snapshots and the snapshot times $ST_n$ that minimize Cost(n),

while changing the number n of snapshots, using the above Expression (4). Note that, in FIG. 11, p(te) represents the probability that an event occurs at the simulation time te. An area S1 corresponds to the re-execution time of the simulation in a case where the state of the simulator #k is restored using the i-th snapshot.

When the simulation is repeatedly executed N times, a snapshot of the simulator #k is then created at each of the retrieved snapshot times $t_0$, $t_1$, ..., and $t_{n-1}$ in each time of the simulation after the Na-th time. Thus, the simulator unit Uk may set the optimal snapshot creation frequency in the environment in which the simulation is executed.

(Simulator Control Processing Procedures by the Client Device 201)

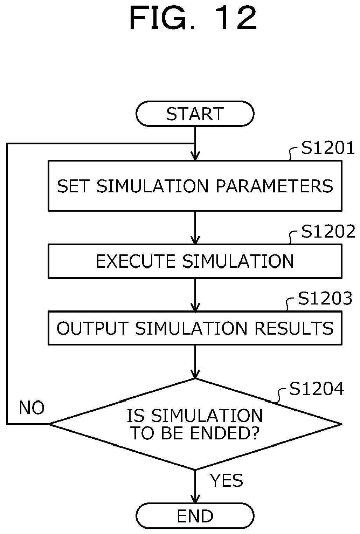

Next, referring to FIG. 12, simulator control processing procedures by the client device 201 are described. A simulator control process by the client device 201 is performed by, for example, the simulator control unit 202 illustrated in FIG. 2.

FIG. 12 is a flowchart illustrating an example of the simulator control processing procedures by the client device 201. In the flowchart in FIG. 12, the client device 201 first sets simulation parameters for each simulator #k, before executing a simulation with a combination of the simulators #1 to #m (step S1201).

The simulation parameters indicate, for example, the number of people, the number of buses, weekdays/holidays, and the like. The simulation parameters may be prepared in advance for each scenario. The scenarios may be created, for example, by the simulator control unit 202, or may be created manually. Also, the simulation parameters may be input by a user operation using an input device (not illustrated). Further, the simulation parameters may be acquired periodically (for example, daily, weekly, or the like) from information about other services (for example, resident information, bus operation information, location information about the person, and the like).

Next, the client device 201 causes the simulators #1 to #m to execute the simulation (step S1202). The client device 201 then outputs simulation result (step S1203). The form of the output is, for example, storage into a storage device, transmission to another computer, displaying on a display (not illustrated), print output to a printer (not illustrated), or the like.

Next, the client device 201 determines whether to end the simulation (step S1204). The simulation ends, for example, in a case where the simulation for each scenario of a plurality of scenarios are completed.

If the simulation is not to be ended herein (step S1204: No), the client device 201 returns to step S1201. If the simulation is to be ended (step S1204: Yes), on the other hand, the client device 201 ends a series of processes according to this flowchart.

Thus, the client device 201 may execute a large-scale simulation by combining the simulators #1 to #m.

(Simulation Processing Procedures by the Simulator Unit Uk)

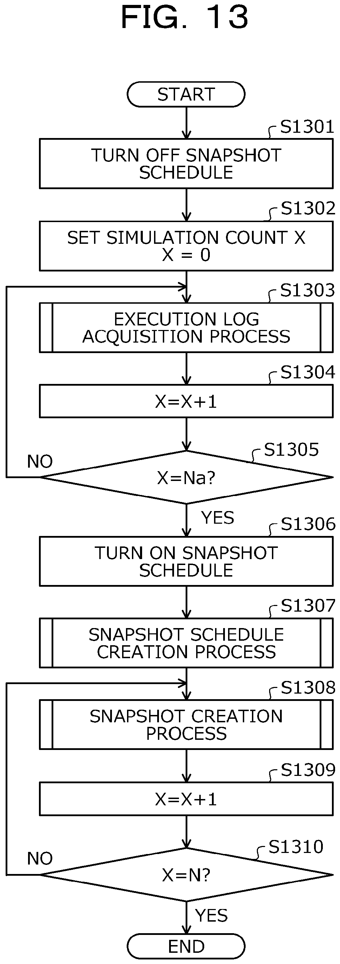

Next, referring to FIG. 13, simulation processing procedures by the simulator unit Uk are described. A simulation process by the simulator unit Uk is started, for example, under the control of the client device 201 (the simulator control unit 202).

FIG. 13 is a flowchart illustrating an example of the simulation processing procedures by the simulator unit Uk. In the flowchart in FIG. 13, the simulator unit Uk first turns off the snapshot schedule (step S1301). Next, the simulator unit Uk initializes the simulation count X to be "X = 0" (step S1302).

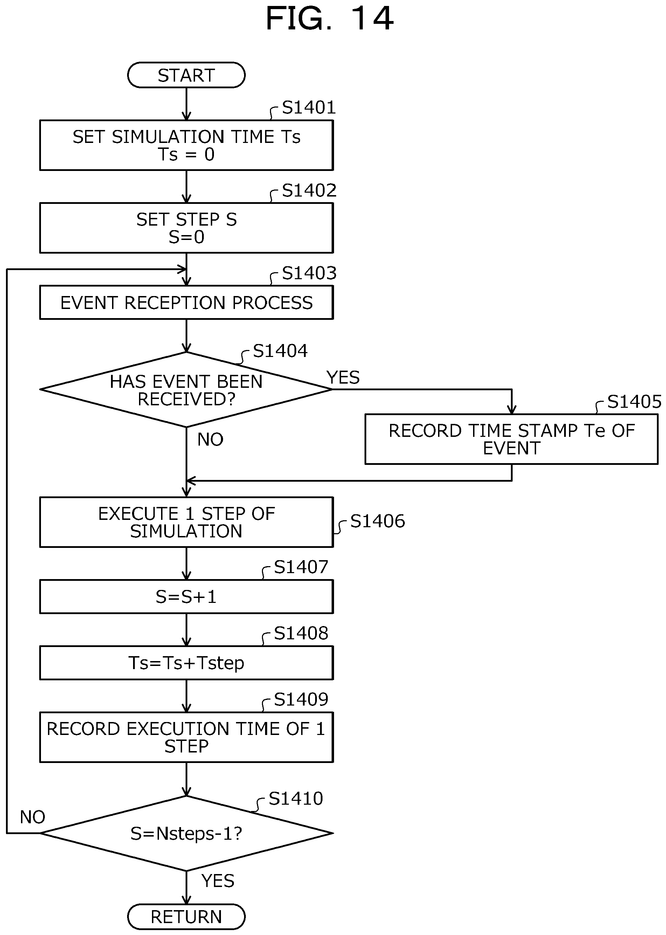

The simulator unit Uk then executes an execution log acquisition process (step S1303). Specific processing procedures in the execution log acquisition process will be described later with reference to FIG. 14.

Next, the simulator unit Uk increments the simulation count X (step S1304). The simulator unit Uk then determines whether the simulation count X indicates "X = Na" (step S1305).

If "X < Na" is satisfied herein (step S1305: No), the simulator unit Uk returns to step S1303. If "X = Na" is satisfied (step S1305: Yes), on the other hand, the simulator unit Uk turns on the snapshot schedule (step S1306).

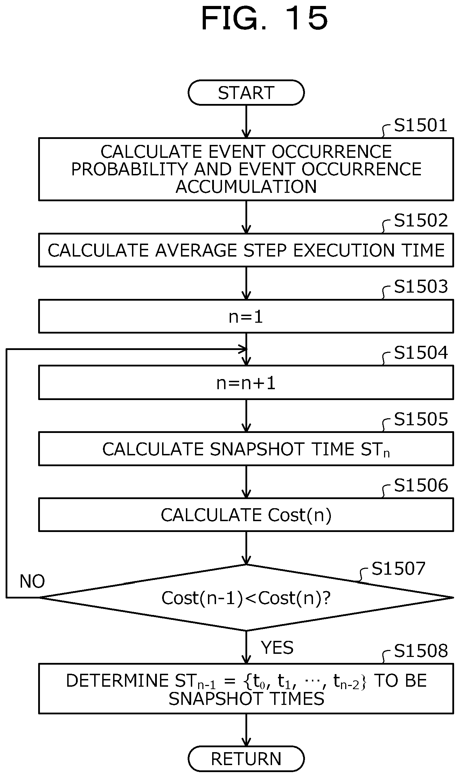

Next, the simulator unit Uk performs a snapshot schedule creation process (step S1307). Specific processing procedures in the snapshot schedule creation process will be described later with reference to FIG. 15.

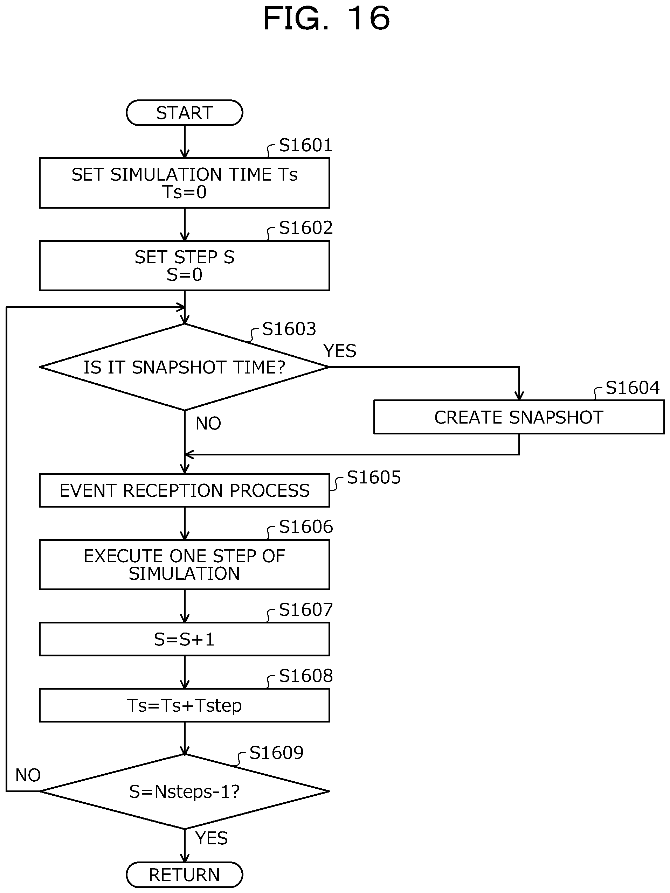

The simulator unit Uk then performs a snapshot creation process (step S1308). Specific processing procedures in the snapshot creation process will be described later with reference to FIG. 16.

Next, the simulator unit Uk increments the simulation count X (step S1309). The simulator unit Uk then determines whether the simulation count X indicates "X = N" (step S1310).

If "X < N" is satisfied herein (step S1310: No), the simulator unit Uk returns to step S1308. If "X = N" is satisfied (step S1310: Yes), on the other hand, the simulator unit Uk ends the series of processes according to this flowchart.

Thus, the simulator unit Uk may execute the simulation in cooperation with another simulator #j.

Next, referring to FIG. 14, specific processing procedures in the execution log acquisition process in step S1303 in FIG. 13 are described.

FIG. 14 is a flowchart illustrating an example of the specific processing procedures in the execution log acquisition process. In the flowchart in FIG. 14, the simulator unit Uk first sets the simulation time Ts to "Ts = 0" (step S1401), and sets the step S to "S = 0" (step S1402).

Next, the simulator unit Uk performs an event reception process (step S1403). The event reception process is a process of receiving an event from another simulator #j to the simulator #k. The simulator unit Uk then determines whether an event has been received in step S1403 (step S1404).

If any event has not been received herein (step S1404: No), the simulator unit Uk moves on to step S1406. If an event has been received (step S1404: Yes), on the other hand, the simulator unit Uk records the time stamp Te of the received event (step S1405).

The simulator unit Uk then executes one step of the simulation with the simulator #k (step S1406). Next, the simulator unit Uk increments the step S (step S1407), and advances the simulation time Ts by Tstep (step S1408).

The simulator unit Uk then records the execution time of the one step (step S1409). Next, the simulator unit Uk determines whether the step S is "S = Nsteps - 1" (step S1410).

If "S < Nsteps - 1" is satisfied herein (step S1410: No), the simulator unit Uk returns to step S1403. At this point of time, the simulator unit Uk changes, for example, the value of a random element. If "S = Nsteps - 1" is satisfied (step S1410: Yes), on the other hand, the simulator unit Uk returns to the step in which the execution log acquisition process has been called out.

Thus, the simulator unit Uk may record the event time (time stamp Te) from the other simulator #j in the simulation and the step execution time of the simulator #k.

Next, referring to FIG. 15, specific processing procedures in the snapshot schedule creation process in step S1307 in FIG. 13 are described.

FIG. 15 is a flowchart illustrating an example of the specific processing procedures in the snapshot schedule creation process. In the flowchart in FIG. 15, the simulator unit Uk first calculates the event occurrence probability and the event occurrence accumulation in each step of the simulator #k, based on the time stamp Te of the recorded event (step S1501).

Next, the simulator unit Uk calculates the average step execution time in each step of the simulator #k, based on the recorded execution time of one step (step S1502). The simulator unit Uk then initializes the number n of snapshots to be "n = 1" (step S1503).

Next, the number n of snapshots is incremented (step S1504). The simulator unit Uk then calculates the snapshot times $ST_n$ from the number n of snapshots and the event occurrence accumulation (step S1505).

Next, the simulator unit Uk calculates Cost(n) from the number n of snapshots and the snapshot times $ST_n$, using the above Expression (4) (step S1506). The simulator unit Uk then determines whether Cost(n) is greater than Cost(n-1) (step S1507).

If Cost(n) is equal to or smaller than Cost(n-1) herein (step S1507: No), the simulator unit Uk returns to step S1504. If Cost(n) is greater than Cost(n-1) (step S1507: Yes), on the other hand, the simulator unit Uk determines "$ST_{n-1} = \{t_0, t_1, ..., t_{n-2}\}$" to be the snapshot times (step S1508), and returns to the step in which the snapshot schedule creation process has been called out.

Thus, the simulator unit Uk may determine the optimal snapshot creation frequency (the number n of snapshots, and the snapshot times $t_0, t_1, ..., $ and $t_{n-2}$).

Next, referring to FIG. 16, specific processing procedures in the snapshot creation process in step S1308 in FIG. 13 are described.

FIG. 16 is a flowchart illustrating an example of the specific processing procedures in the snapshot creation process. In the flowchart in FIG. 16, the simulator unit Uk first sets the simulation time Ts to "Ts = 0" (step S1601), and sets the step S to "S = 0" (step S1602).

Next, the simulator unit Uk determines whether the simulation time Ts is a snapshot time (step S1603). A snapshot time is one of the snapshot times $\{t_0, t_1, ..., $ and $t_{n-2}\}$ determined in step S1508 in FIG. 15.

If it is not a snapshot time herein (step S1603: No), the simulator unit Uk moves on to step S1605. If it is a snapshot time (step S1603: Yes), on the other hand, the simulator unit Uk creates a snapshot of the simulator #k (step S1604).

Next, the simulator unit Uk performs an event reception process (step S1605). The simulator unit Uk then executes one step of the simulation with the simulator #k (step S1606). Next, the simulator unit Uk increments the step S (step S1607), and advances the simulation time Ts by Tstep (step S1608).

The simulator unit Uk then determines whether the step S is "S = Nsteps - 1" (step S1609). If "S < Nsteps - 1" is satisfied herein (step S1609: No), the simulator unit Uk returns to step S1603. At this point of time, the simulator unit Uk changes, for example, the value of a random element.

If "S = Nsteps - 1" is satisfied (step S1609: Yes), on the other hand, the simulator unit Uk returns to the step in which the snapshot creation process has been called out.

As a result, the simulator unit Uk may acquire a snapshot of the simulator #k at each of the snapshot times $\{t_0, t_1, ..., $ and $t_{n-2}\}$ during the simulation.

As described above, with the simulator unit Uk according to the second embodiment, it is possible to determine timings of creation of snapshots of the simulator #k, based on the event occurrence probability and the execution time of each step of the simulator #k in a simulation that is executed by the simulator #k in cooperation with another simulator #j.

As a result, the simulator unit Uk may optimize the snapshot creation frequency (the number n of snapshots, and the snapshot times $ST_n$) of the simulator #k in the simulation that is executed by the simulator #k in cooperation with another simulator #j. For example, the simulator unit Uk may enable creation of snapshots of the simulator #k before a rise in the probability of occurrence of an event from the other simulator #j, and may lower the simulation re-execution costs while reducing the number of unnecessary snapshots. At this point of time, the simulator unit Uk may accurately determine the snapshot creation frequency, by considering the event occurrence probability and the execution time in each step of the simulator #k.

Also, with the simulator unit Uk, when a simulation is repeatedly executed N times, it is possible to record the event occurrence records (for example, the time stamp Te) and record the execution times of the respective steps in each time of the simulation from the initial time to the Na-th time (a first designated time) among the N times. Further, with the simulator unit Uk, it is possible to calculate the event occurrence probabilities in the respective steps, based on the recorded event occurrence records, and calculate the average step execution time, based on the recorded execution times of the respective steps. Furthermore, with the simulator unit Uk, it is possible to determine snapshot creation timings in the simulation after the Na-th time among the N times, based on the calculated event occurrence probabilities in the respective steps and the calculated average step execution times in the respective steps.

As a result, using the first Na times of the simulation in a case where the simulation is repeatedly executed N times, the simulator unit Uk may predict the event occurrence probability and the execution time (the average step execution time) in each subsequent step of the simulator #k in the simulation. Thus, the simulator unit Uk may accurately determine the snapshot creation frequency in the simulation after the Na-th time.

Also, with the simulator unit Uk, it is possible to determine snapshot creation timings by searching for the number n of snapshots and the snapshot times $\{t_0, t_1, ..., \text{and } t_{n-1}\}$ that minimize Cost(n) while changing the number n of snapshots. Cost(n) is a combination of the total snapshot acquisition time (the first cost) to be taken to create snapshots corresponding to the number n of snapshots, and the estimated re-execution time (the second cost) to be taken to re-execute the simulation using the snapshots. The total snapshot acquisition time (the first cost) is expressed based on the time to be taken to create one snapshot ($C_{snap}$). Meanwhile, the estimated re-execution time (the second cost) is expressed based on the event occurrence probabilities and the execution times (for example, the average step execution times) in the respective steps.

Thus, the simulator unit Uk may determine the snapshot creation frequency so as to minimize the costs (the total snapshot acquisition time + the estimated re-execution time), considering the event occurrence probabilities and the execution times in the respective steps of the simulator #k.

Further, with the simulator unit Uk, it is possible to create snapshots of the simulator #k at the determined creation timings in simulation (for example, the simulation after the Na-th time).

Thus, the simulator unit Uk may acquire a snapshot of the simulator #k at an appropriate frequency in the simulation.

Also, with the simulator unit Uk, when the simulation is repeatedly executed N times, it is possible to determine whether the event occurrence probability in each step has converged at the Na'-th time (the second designated time) earlier than the Na-th time (the first designated time). Further, with the simulator unit Uk, when it is determined that the event occurrence probability has converged, it is possible to stop the recording of the event occurrence records and the recording of the execution times in the respective steps in the simulation after the Na'-th time among the N times. Furthermore, with the simulator unit Uk, it is possible to determine the snapshot creation timings in the simulation after the Na'-th time among the N times, based on the execution times and the event occurrence probabilities in the respective steps of the simulator #k till the Na'-th time (the second designated time).

Thus, when there are no large fluctuations in the event occurrence probabilities in the respective steps, the simulator unit Uk may perform snapshot scheduling at an earlier stage than planned (the Na-th time).

In view of these aspects, with the simulator unit Uk according to the second embodiment, in an environment in which a simulation combining the simulators #1 to #m is executed, it is possible to optimize the snapshot creation frequency of each simulator #k, and lower the re-execution cost of the simulation while reducing the number of unnecessary snapshots. Thus, the simulator unit Uk may efficiently execute a large-scale simulation that simulates a congestion situation by combining a traffic simulator and a human behavior simulator, for example.

Note that the information processing method described in the embodiments may be implemented by executing a program prepared beforehand in a computer such as a personal computer or a workstation. This information processing program is recorded in a computer-readable recording medium such as a hard disk, a flexible disk, a CD-ROM, a DVD, or a USB memory, and is read from the recording medium to be executed by a computer. Furthermore, this information processing program may be distributed via a network such as the Internet.

**Claims**

1. An information processing method, comprising:

acquiring by a computer, in a simulation that is executed by a target simulator in cooperation with another simulator, a probability of occurrence of data communication from the other simulator to the target simulator, for each of sections obtained by dividing a simulation time of the target simulator; and
determining timings of creation of a snapshot of the target simulator in the simulation, based on the acquired probability of occurrence of the data communication in each of the sections.

2. The information processing method according to claim 1, further comprising:
determining the timings of creation, based on an execution time to be taken to execute the simulation in each of the sections of the target simulator, and the acquired probability of occurrence of the data communication in each of the sections.

3. The information processing method according to claim 2, further comprising:

recording an occurrence record of the data communication and recording the execution time to be taken to execute the simulation in each of the sections of the target simulator, in each time of the simulation from an initial time to a first designated time among N times, when the simulation is repeatedly executed the N times;
calculating the probability of occurrence of the data communication in each of the sections, based on the recorded occurrence record of the data communication;
calculating an average execution time in each of the sections, based on the recorded execution time of each of the sections; and
determining the timings of creation of the snapshot in the simulation after the first designated time among the N times, based on the calculated probability of occurrence of the data communication in each of the sections and the calculated average execution time in each of the sections.

4. The information processing method according to claim 2, further comprising:

determining the timings of creation by searching for a number of snapshots to be created and creation times, so as to minimize a total cost of a first cost for creation of the snapshots that correspond to the number of snapshots to be created and a second cost for re-execution of the simulation that uses the snapshots, while changing the number of snapshots to be created in the simulation,
wherein
the first cost is expressed based on a time to be taken to create the snapshot once, and
the second cost is expressed based on the execution time in each of the sections and the probability of occurrence of the data communication in each of the sections.

5. The information processing method according to any one of claims 1 to 4, wherein the section is one step of the target simulator that executes the simulation step by step.

6. The information processing method according to any one of claims 1 to 5, further comprising:
creating the snapshot at each of the determined timings of creation in the simulation.

7. The information processing method according to claim 3, further comprising:

determining whether the probability of occurrence of the data communication in each of the sections has converged in a second designated time before the first designated time;
when it is determined that the probability of occurrence has converged, stopping the recording of the occurrence record of the data communication and recording of the execution time of each of the sections in the simulation after the second designated time among the N times; and
determining the timings of creation of the snapshot in the simulation after the second designated time among the N times.

8. An information processing program that causes a computer to execute the information processing method according to claim 1.

# FIG. 1

# FIG. 2

200

SIMULATOR — #k

U1 U2 Uk

...

EXECUTION TIME LOG TABLE — 230

EVENT LOG TABLE — 220

Um

...

210

202
SIMULATOR CONTROL UNIT

201

# FIG. 3

Uk

DISK 304

CPU 301

MEMORY 302

DISK DRIVE 303

300

COMMUNICATION I/F 305

PORTABLE RECORDING MEDIUM I/F 306

PORTABLE RECORDING MEDIUM 307

NETWORK 210

# FIG. 4

EVENT LOG TABLE ～220

| TRIAL ID | EVENT-1 TIME STAMP | EVENT-2 TIME STAMP | EVENT-3 TIME STAMP | . . . |
|---|---|---|---|---|
| sim001 | 10 | 15 | 30 | . . . |
| sim002 | 13 | 25 | 31 | . . . |
| . . . | . . . | . . . | . . . | . . . |

400-1 (sim001 row)
400-2 (sim002 row)

# FIG. 5

EXECUTION TIME
LOG TABLE — 230

| TRIAL ID | 0 | 1 | 2 | · · · | Nsteps - 1 |
|----------|-----|-----|-----|-------|------------|
| sim001 | 100 | 110 | 300 | · · · | 200 |
| sim002 | 102 | 105 | 31 | · · · | 310 |
| · · · | · · · | · · · | · · · | · · · | · · · |

500-1 — sim001

500-2 — sim002

# FIG. 6

Uk

SIMULATOR UNIT

600

CONTROL UNIT

604
SNAPSHOT MANAGEMENT UNIT

606
SYNCHRONIZATION CONTROL UNIT

601
LOG MANAGEMENT UNIT

602
SCHEDULER

603
SNAPSHOT CREATION UNIT

605
PROGRESS MONITORING UNIT

#k
SIMULATOR

# FIG. 7

700

| TRIAL ID | 0 | 1 | 2 | · · · | Nsteps-1 |
|---|---|---|---|---|---|
| sim001 | NO | YES | YES | · · · | NO |
| sim002 | NO | NO | YES | · · · | NO |
| · · · | · · · | · · · | · · · | · · · | · · · |
| sim100 | NO | YES | YES | · · · | NO |
| EVENT OCCURRENCE PROBABILITY | 0.00 | 0.75 | 0.90 | · · · | 0.00 |
| EVENT OCCURRENCE ACCUMULATION | 0.00 | 0.75 | 1.65 | · · · | 56.7 |

EP 4 379 593 A1

# FIG. 8

800

| TRIAL ID | 0 | 1 | 2 | · · · | Nsteps-1 |
|---|---|---|---|---|---|
| sim001 | 100 | 110 | 300 | · · · | 200 |
| sim002 | 102 | 105 | 150 | · · · | 310 |
| · · · | · · · | · · · | · · · | · · · | · · · |
| sim100 | 105 | 98 | 200 | · · · | 250 |
| AVERAGE STEP EXECUTION TIME | 102 | 103 | 210 | · · · | 270 |

# FIG. 9

EVENT OCCURRENCE
PROBABILITY p(t)

901

EVENT OCCURRENCE
ACCUMULATION epa(t)

902

$n=3$

$t_0$     $t_1$     $t_2$

# FIG. 10

# FIG. 11

# FIG. 12

```
        ( START )
            |
            v
  +----------------------------+  ⌐S1201
  | SET SIMULATION PARAMETERS  |
  +----------------------------+
            |
            v
  +----------------------------+  ⌐S1202
  |     EXECUTE SIMULATION      |
  +----------------------------+
            |
            v
  +----------------------------+  ⌐S1203
  | OUTPUT SIMULATION RESULTS   |
  +----------------------------+
            |
            v
         /‾‾‾‾‾‾‾‾‾‾‾‾\  ⌐S1204
   NO   <  IS SIMULATION  >
  <------  TO BE ENDED?   >
         _____/
            |
            | YES
            v
          ( END )
```

# FIG. 13

```
                    ┌──────────┐
                    │  START   │
                    └──────────┘
                         │
                         ▼              ⌐S1301
        ┌─────────────────────────────┐
        │      TURN OFF SNAPSHOT       │
        │          SCHEDULE            │
        └─────────────────────────────┘
                         │
                         ▼              ⌐S1302
        ┌─────────────────────────────┐
        │    SET SIMULATION COUNT X    │
        │           X = 0              │
        └─────────────────────────────┘
                         │
         ┌───────────────▶              ⌐S1303
         │  ┌─────────────────────────────┐
         │  │      EXECUTION LOG           │
         │  │   ACQUISITION PROCESS        │
         │  └─────────────────────────────┘
         │               │
         │               ▼              ⌐S1304
         │  ┌─────────────────────────────┐
         │  │           X=X+1             │
         │  └─────────────────────────────┘
         │               │
    NO   │               ▼              ⌐S1305
         └──────────◇  X=Na?  ◇
                         │
                         │ YES          ⌐S1306
        ┌─────────────────────────────┐
        │      TURN ON SNAPSHOT        │
        │          SCHEDULE            │
        └─────────────────────────────┘
                         │
                         ▼              ⌐S1307
        ┌─────────────────────────────┐
        │    SNAPSHOT SCHEDULE         │
        │     CREATION PROCESS         │
        └─────────────────────────────┘
                         │
         ┌───────────────▶              ⌐S1308
         │  ┌─────────────────────────────┐
         │  │    SNAPSHOT CREATION         │
         │  │        PROCESS               │
         │  └─────────────────────────────┘
         │               │
         │               ▼              ⌐S1309
         │  ┌─────────────────────────────┐
         │  │           X=X+1             │
         │  └─────────────────────────────┘
         │               │
    NO   │               ▼              ⌐S1310
         └──────────◇   X=N?  ◇
                         │ YES
                    ┌──────────┐
                    │   END    │
                    └──────────┘
```

# FIG. 14

```
                    START

                                    ┌ S1401
         SET SIMULATION TIME Ts
                Ts = 0

                                    ┌ S1402
              SET STEP S
                 S=0

                                    ┌ S1403
         EVENT RECEPTION PROCESS

                                    ┌ S1404
                                              YES
          HAS EVENT BEEN  ─────────────────────────┐
            RECEIVED?                               │
                                                    │   ┌ S1405
                 NO                          RECORD TIME STAMP Te OF
                                                    EVENT

                                    ┌ S1406
            EXECUTE 1 STEP OF
              SIMULATION

                                    ┌ S1407
                S=S+1

                                    ┌ S1408
              Ts=Ts+Tstep

                                    ┌ S1409
         RECORD EXECUTION TIME OF 1
                   STEP

                                    ┌ S1410
     NO
              S=Nsteps-1?

                 YES

                   RETURN
```

# FIG. 15

```
                    ( START )
                       │
                       ▼                    ┌─ S1501
         ┌──────────────────────────────────┐
         │   CALCULATE EVENT OCCURRENCE     │
         │ PROBABILITY AND EVENT OCCURRENCE │
         │           ACCUMULATION           │
         └──────────────────────────────────┘
                       │
                       ▼                    ┌─ S1502
         ┌──────────────────────────────────┐
         │ CALCULATE AVERAGE STEP EXECUTION TIME │
         └──────────────────────────────────┘
                       │
                       ▼                    ┌─ S1503
         ┌──────────────────────────────────┐
         │              n=1                 │
         └──────────────────────────────────┘
                       │
                       ▼                    ┌─ S1504
         ┌──────────────────────────────────┐
         │             n=n+1                │
         └──────────────────────────────────┘
                       │
                       ▼                    ┌─ S1505
         ┌──────────────────────────────────┐
         │  CALCULATE SNAPSHOT TIME $ST_n$  │
         └──────────────────────────────────┘
                       │
                       ▼                    ┌─ S1506
         ┌──────────────────────────────────┐
         │         CALCULATE Cost(n)        │
         └──────────────────────────────────┘
                       │
                       ▼                    ┌─ S1507
   NO        ◇ Cost(n-1)<Cost(n)? ◇
                       │ YES               ┌─ S1508
                       ▼
         ┌──────────────────────────────────┐
         │ DETERMINE $ST_{n-1} = \{t_0, t_1, \cdots, t_{n-2}\}$ TO BE │
         │           SNAPSHOT TIMES         │
         └──────────────────────────────────┘
                       │
                       ▼
                    ( RETURN )
```

# FIG. 16

```
                    START
                      |
                      v                  ┌ S1601
        ┌──────────────────────────────┐
        │  SET SIMULATION TIME Ts        │
        │         Ts=0                   │
        └──────────────────────────────┘
                      |
                      v                  ┌ S1602
        ┌──────────────────────────────┐
        │       SET STEP S               │
        │         S=0                    │
        └──────────────────────────────┘
                      |
                      v                  ┌ S1603
              ◇ IS IT SNAPSHOT TIME?  ───── YES ──┐
                      |                            v       ┌ S1604
                     NO                  ┌──────────────────────────┐
                      |                  │   CREATE SNAPSHOT          │
                      |                  └──────────────────────────┘
                      v                  ┌ S1605
        ┌──────────────────────────────┐
        │   EVENT RECEPTION PROCESS      │
        └──────────────────────────────┘
                      |
                      v                  ┌ S1606
        ┌──────────────────────────────┐
        │   EXECUTE ONE STEP OF          │
        │        SIMULATION              │
        └──────────────────────────────┘
                      |
                      v                  ┌ S1607
        ┌──────────────────────────────┐
        │          S=S+1                 │
        └──────────────────────────────┘
                      |
                      v                  ┌ S1608
        ┌──────────────────────────────┐
        │        Ts=Ts+Tstep             │
        └──────────────────────────────┘
                      |
                      v                  ┌ S1609
      NO  ──── ◇ S=Nsteps-1?
                      |
                     YES
                      v
                   RETURN
```

Europäisches
Patentamt

European
Patent Office

Office européen
des brevets

# EUROPEAN SEARCH REPORT

Application Number

EP 23 19 9380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QUAGLIA F.: "A cost model for selecting checkpoint positions in time warp parallel simulation", IEEE TRANSACTIONS ON PARALLEL AND DISTRIBUTED SYSTEMS, vol. 12, no. 4, 1 April 2001 (2001-04-01), pages 346-362, XP093138060, USA ISSN: 1045-9219, DOI: 10.1109/71.920586 * abstract * * sections 1, 3.1, 3.3, 5 * * figures 1, 6 * * the whole document * ----- | 1-8 | INV. G06F30/20 ADD. G06F111/02 |
| X | SENG CHUAN TAY ET AL: "Probabilistic checkpointing in time warp parallel simulation", MODELING, ANALYSIS AND SIMULATION OF COMPUTER AND TELECOMMUNICATION SY STEMS, 2000. PROCEEDINGS. 8TH INTERNATIONAL SYMPOSIUM ON SAN FRANCISCO, CA, USA 29 AUG.-1 SEPT. 2000, LOS ALAMITOS, CA, USA,IEEE COMPUT. SOC, US, 29 August 2000 (2000-08-29), pages 366-373, XP010515435, ISBN: 978-0-7695-0728-6 * abstract * * figures 2-5 * * table 1 * * sections 3-3.2 * * the whole document * ----- -/-- | 1-8 | TECHNICAL FIELDS SEARCHED (IPC) G06F |

The present search report has been drawn up for all claims

| Place of search | Date of completion of the search | Examiner |
|---|---|---|
| Munich | 15 March 2024 | Joris, Pierre |

EPO FORM 1503 03.82 (P04C01)

Europäisches
Patentamt

European
Patent Office

Office européen
des brevets

# EUROPEAN SEARCH REPORT

**Application Number**

EP 23 19 9380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AURICHE L R G ET AL: "RUN-TIME SELECTION OF THE CHECKPOINT INTERVAL IN TIME WARP BASED SIMULATIONS", SIMULATION PRACTICE AND THEORY, ELSEVIER SCIENCE, NL, vol. 6, no. 5, 15 July 1998 (1998-07-15), pages 461-478, XP008050737, ISSN: 0928-4869, DOI: 10.1016/S0928-4869(97)00030-X * abstract * * figure 3 * * sections 4-4.2 * * the whole document * | 1-8 | |

TECHNICAL FIELDS
SEARCHED (IPC)

The present search report has been drawn up for all claims

| Place of search | Date of completion of the search | Examiner |
|---|---|---|
| Munich | 15 March 2024 | Joris, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Patent documents cited in the description**

- JP 6295295 A

- JP 2005234617 A